# EUROPÄISCHE PATENTSCHRIFT

(11) **EP 1 144 887 B1**
(45) Veröffentlichungstag und Bekanntmachung des Hinweises auf die Patenterteilung: **27.08.2003**
(21) Anmeldenummer: 00907475.8
(22) Anmeldetag: 14.01.2000
(51) Int. Cl.: F16H 47/04, F16H 37/08, B63H 20/20

(54) **SCHIFFSGETRIEBESTUFE MIT VERÄNDERLICHER ÜBERSETZUNG**
VARIABLE-RATIO MARINE GEAR STEP
ETAGE REDUCTEUR MARIN A RAPPORT VARIABLE

(30) Priorität: 20.01.1999 DE 19902084
(43) Veröffentlichungstag der Anmeldung: 17.10.2001
(73) Patentinhaber: ZF FRIEDRICHSHAFEN Aktiengesellschaft, 88038 Friedrichshafen (DE)
(72) Erfinder: HUNOLD, Bernard, D-88046 Friedrichshafen (DE); PAUL, Andreas, D-88045 Friedrichshafen (DE)
(86) Internationale Anmeldenummer: EP0000251
(87) Internationale Veröffentlichungsnummer: WO00043696

(56) Entgegenhaltungen:
- EP-A- 0 177 240
- WO-A-89/02550
- DE-A- 3 926 794
- DE-A- 4 124 479
- GB-A- 914 314
- US-A- 3 969 957
- DATABASE WPI Derwent Publications Ltd., London, GB; AN 1999090682 XP002138426 & JP 10 325450 A (YAMAHA), 8. Dezember 1998 (1998-12-08)
- PATENT ABSTRACTS OF JAPAN vol. 011, no. 310 (M-630), 9. Oktober 1987 (1987-10-09) & JP 62 098051 A (ISHIKAWAJIMA HARIMA HEAVY IND CO LTD), 7. Mai 1987 (1987-05-07)
- VON FRIEDRICH JARCHOW UND GÜNTHER BERGER: "Stufenlos wirkendes Hydrostatisches Lastschaltgetriebe für Kraftfahrzeuge" V.D.I. ZEITSCHRIFT, Nr. 3, August 1987 (1987-08), Seiten 38-46, XP002138356
- PATENT ABSTRACTS OF JAPAN vol. 017, no. 423 (M-1458), 6. August 1993 (1993-08-06) & JP 05 087201 A (SUZUKI MOTOR CORP), 6. April 1993 (1993-04-06) & JP 05 087201 A (SUZUKI MOTOR) 6. April 1993 (1993-04-06)

## Beschreibung

Die Erfindung betrifft eine Schiffsgetriebestufe mit veränderlicher Übersetzung nach dem Oberbegriff des Hauptanspruchs.

Bei Schiffsantrieben mit fest vorgegebener Übersetzung zwischen Antriebsmotor und einem Abtriebselement (z. B. Schiffsschraube) ist eine optimale Abstimmung des Antriebsstranges nur für einen einzigen Betriebspunkt möglich. In vielen Fällen kann deshalb der Motor nicht im optimalen Betriebspunkt betrieben werden. Beispiele für verschiedene Betriebsbedingungen, für die unterschiedliche Auslegungen erforderlich wären, sind bei einem als Gleiter ausgelegten Schiff einerseits Verdrängungsfahrt mit erhöhtem Widerstand und andererseits Gleitfahrt. Bei Arbeitsfahrzeugen wie Schleppern oder Fischereifahrzeugen ergeben sich aus Betriebszuständen wie Schleppbetrieb bei langsamer Fahrt mit hohem Widerstand oder Freifahrt zum oder vom Einsatzort mit möglichst hoher Geschwindigkeit verschiedene Auslegungsoptima, die von einem Antriebsstrang mit fester Übersetzung nicht gleichzeitig erfüllbar sind. Auch Umgebungsbedingungen wie z. B. Wellengang beeinflussen den Schiffswiderstand, so daß bei der Auslegung der Übersetzung Kompromisse eingegangen werden müssen zwischen maximaler Geschwindigkeit bei ruhiger See bzw. unbeladenem Schiff und ausreichender Zugkraft für Beschleunigungsfahrt bzw. Fahrt mit erhöhtem Schiffswiderstand.

Es sind Schiffsantriebsanlagen bekannt, bei denen Verstellpropeller durch eine veränderbare Steigung eine Anpassung der Leistungsaufnahme an die verfügbare Motorleistung erlauben. Solche Verstellpropeller sind jedoch aufwendig, und, da sie mechanisch hochbelastet sind, auch teuer und anfällig. Für schnelle, hochmotorisierte Yachten ist die Verwendung von Verstellpropellern daher unüblich.

Ein zweistufiges Getriebe, wie es beispielsweise in der DE 196 24 913 A1 beschrieben ist, bietet demgegenüber einige Vorteile. Auch wenn der Propeller aufgrund einer geringen Schiffsgeschwindigkeit eine hohe Momentaufnahme hat, kann der Antriebsmotor in einem kürzer übersetzten ersten Gang dennoch mit einer Drehzahl betrieben werden, bei der die abgegebene Leistung ausreichend groß ist, um erst bei höherer Schiffsgeschwindigkeit in den zweiten Gang zu schalten. Bei Sportbooten kann so eine wesentlich bessere Beschleunigung erzielt werden. Die Zeit bis zum Erreichen des Gleitzustandes ist wesentlich kürzer. Bei hochmotorisierten Sportbooten, die hohe Beschleunigungswerte erreichen, hat sich jedoch gezeigt, daß die Schaltqualität bei einem Gangstufenwechsel insbesondere bei hoher Motorlast kritisch ist. Mittels elektronischer Steuerungsverfahren läßt sich zwar eine sehr gute Schaltqualität erzielen. Voraussetzung hierfür ist jedoch, daß entsprechende elektronische Steuerungen vorhanden und aufeinander abgestimmt sind, und daß nicht am Antriebsstrang manipuliert wird, was zur Leistungssteigerung bei Sportbooten oftmals geschieht. Weitere Gangstufen würden zwar eine noch bessere Anpassung an verschiedene Betriebsbedingungen erlauben, jedoch würde durch diese Maßnahme die Gangwechselhäufigkeit zunehmen und das Getriebe komplexer und schwerer.

In der gattungsgemäßen DE 39 267 94 A1 und in Patent Abstracts of Japan 62098051 sind stufenlos leistungsverzweigte Schiffsgetriebestufen offenbart. Bei diesen Schiffsantriebsanlagen wird der Antriebsmotor bei Schleichfahrt in einem ungünstigen Betriebsbereich betrieben.

Der vorliegenden Erfindung liegt daher die Aufgabe zugrunde, eine Schiffsgetriebestufe für eine Schiffsantriebsanlage anzugeben, welche auch bei Schleichfahrt mit gutem Wirkungsgrad betrieben werden kann. Ferner soll sie ein geringes Gewicht aufweisen und kostengünstig herstellbar sein.

Diese Aufgabe wird durch eine Schiffsgetriebestufe mit den Merkmalen der unabhängigen Patentansprüche gelöst.

Innerhalb des Verstellbereichs der erfindungsgemäßen stufenlosen Schiffsgetriebestufe kann für jeden Betriebspunkt die optimale Getriebeübersetzung gewählt werden. Der Antriebsmotor kann ständig mit der optimalen Drehzahl betrieben werden, wobei nur geringe Verlustleistungen auftreten. Mit der erfindungsgemäßen Antriebsanlage lassen sich sowohl in Bezug auf Fahrzeugbeschleunigung, Höchstgeschwindigkeit und Schleppkraft als auch in Bezug auf Kraftstoffverbrauch, Abgasemission und Geräusch im Teillastbereich wesentliche Vorteile erzielen. Bei einer Vollastbeschleunigung kann der Antriebsmotor durch kontinuierliche Verstellung der Übersetzung ständig mit Nenndrehzahl und maximaler Leistung betrieben werden, die während der gesamten Beschleunigungsphase auf das Abtriebselement übertragen wird. Dabei tritt zu keiner Zeit ein unerwünschter Schaltruck auf.

Steigt beispielsweise während einer Fahrt mit Höchstgeschwindigkeit der Schiffswiderstand aufgrund von höherem Wellengang, kann sehr feinfühlig eine etwas kürzere Übersetzung gefahren werden, während bei glatter Wasseroberfläche mit einer etwas längeren Übersetzung noch höhere Geschwindigkeiten erzielbar sind. Im Teillastbereich kann durch Wahl einer längeren Übersetzung der Antriebsmotor kraftstoffsparend mit kleinerer Drehzahl und hohem Moment betrieben werden.

Die Leistungsübertragung erfolgt mit der erfindungsgemäßen Schiffsgetriebestufe ohne wesentliche Leistungsverluste.

Vorteilhafte Ausgestaltungen der Erfindung sind in den Unteransprüchen enthalten.

In einer bevorzugten Ausführungsform der Erfindung entspricht die vom zweiten Leistungszweig erzeugte Übersetzung zwischen äußerer Antriebswelle und Abtriebswelle bei angenommenem stillgesetzten ersten Eingangselement des Überlagerungsgetriebes mindestens der dreifachen Übersetzung der vom ersten Leistungszweig erzeugten Übersetzung bei angenommenem stillgesetzten zweiten Eingangselement des Überlagerungsgetriebes. In diesem Fall wird im zweiten, stufenlosen Leistungszweig höchstens der dritte Teil der Leistung des ersten Leistungszweiges übertragen. Die stufenlose Übersetzungsstufe im zweiten Leistungszweig kann dann entsprechend klein, leicht und kostengünstig gewählt werden.

Im Unterschied zu landgebundenen Fahrzeugen steigt die Leistungsaufnahme einer Schiffsschraube etwa mit der dritten Potenz der Drehzahl an. Somit ist für die Anpassung an verschiedene Betriebsbedingungen nur eine relativ geringe Gesamtspreizung zwischen Antrieb und Abtrieb erforderlich.

Durch die Anordnung einer elektrischen oder hydraulischen Generator-Motor Kombination im zweiten Leistungszweig wird es möglich, das sekundäre Übertragungsglied im zweiten Leistungszweig auch bei angetriebenen ersten Übertragungsglied ohne wesentliche Verluste stillzusetzen und auch in umgekehrter Drehrichtung zu betreiben. Die Leistung des Antriebsmotors, die Leistungsaufnahme des Abtriebselements und die Getriebeübersetzung im ersten Leistungszweig werden vorteilhafterweise so aufeinander abgestimmt, daß im häufigsten Betriebspunkt die optimale Gesamtübersetzung herrscht, wenn die Übertragungsglieder des zweiten Leistungszweigs und das zweite Eingangselement des Überlagerungsgetriebes stillstehen. Ausgehend von diesem Betriebspunkt mit optimalem Getriebewirkungsgrad kann die Gesamtübersetzung dann sowohl vergrößert als auch verkleinert werden.

Verschiedene Ausführungsformen und weitere vorteilhafte Ausgestaltungen der Erfindung werden anhand der beiliegenden, schematischen Zeichnungen erläutert.
Es zeigen:
- Fig. 1, 2: Ausführungsformen einer Schiffsge -
- Fig. 3, 5: triebestufe mit einer KegelscheibenUmschlingungsgetriebestufe im zweiten Leistungszweig,
- Fig. 4: eine Ausführungsform mit einer Reibradgetriebestufe im zweiten Leistungszweig,
- Fig. 6: ein Ausführungsform mit einer elektrischen Generator-Motor Kombination im zweiten Leistungszweig und
- Fig. 7: eine Ausführungsform mit einem Hydrostatgetriebe im zweiten Leistungszweig.

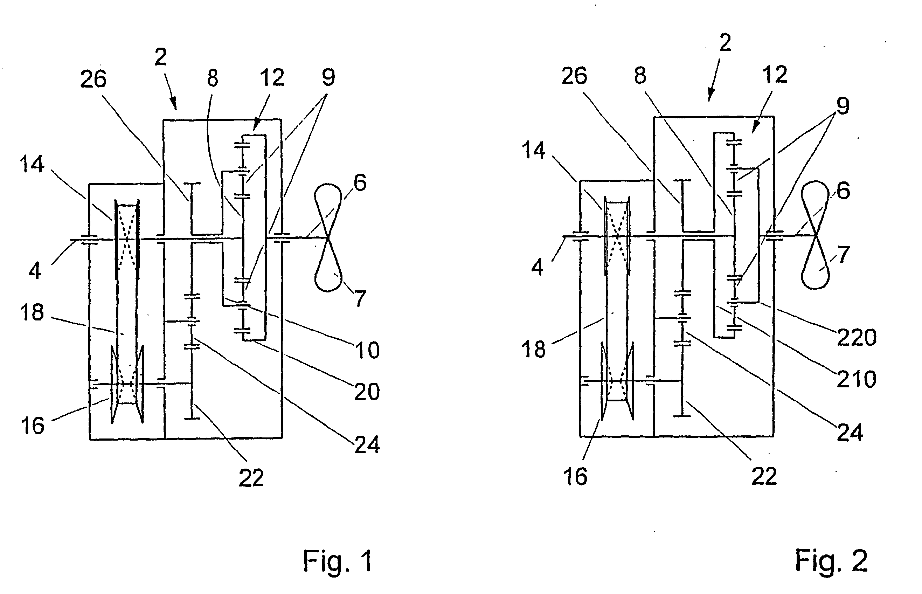

In Fig. 1 ist mit 2 eine erfindungsgemäße Schiffsgetriebestufe bezeichnet. Dieser kann antriebsseitig oder abtriebsseitig ein Wendegetriebe vor- oder nachgeschaltet sein. Im Fall eines Waterjet-Antriebs ist ein Wendegetriebe nicht zwingend erforderlich. Mit 4 ist die motorseitige Antriebswelle und mit 6 die Abtriebswelle bezeichnet, welche das Abtriebselement, hier die Schiffsschraube 7, treibt. Die Antriebswelle 4 treibt in einem ersten, starrübersetzten Leistungszweig das erste Eingangselement -das Sonnenrad 8- des Überlagerungsgetriebes 12. Ein zweiter Leistungszweig führt auf ein zweites Eingangselement, den Planetenträger 10 des Überlagerungsgetriebes 12. Der Planetenträger 10 wird über eine Stirnräderkette 26, 24, 22 mit einem Zwischenrad 24 von einem sekundären Übertragungsglied - dem Kegelscheibenpaar 16- eines Kegelscheiben-Umschlingungsgetriebes angetrieben. Das sekundäre Kegelscheibenpaar 16 wird über das Umschlingungsorgan 18, welches als Übertragungsmittel dient, vom primären Kegelscheibenpaar 14, welches drehfest auf der Antriebswelle 4 sitzt, angetrieben. Die Kegelscheiben jeweils eines Paares 14, 16 sind durch eine nicht dargestellte hydraulische Betätigungseinrichtung im axialen Abstand verstellbar, so daß der für die Übersetzung wirksame Radius des zwischen den Kegelscheiben gehaltenen Umschlingungsorgans 18 veränderbar ist. Das Umschlingungsorgan 18 -beispielsweise ein Schubgliederband umschlingt die beiden versetzt angeordneten Kegelscheibenpaare. Auf diese Weise ist die Übersetzung zwischen dem primärseitigen und dem sekundärseitigen Übertragungsglied im zweiten Leistungszweig im wesentlichen ohne Schlupf stufenlos veränderbar. Die Bewegungen der beiden Eingangselemente, Sonnenrad 8 und Planetenträger 10, des Überlagerungsgetriebes 12 werden über die Planetenräder 9, die in gleichzeitigem Zahneingriff mit dem Sonnenrad 8 und dem Hohlrad 20 sind und auf Achsen des Planetenträgers drehbar gelagert sind überlagert und auf das Ausgangselement -das Hohlrad 20- übertragen.

Ausgehend von Fig. 1 sind in den weiteren Figuren gleiche Positionen mit gleichen Bezugsziffern versehen. Im Unterschied zu der Ausführungsform nach Fig. 1 ist bei der Schiffsgetriebestufe gemäß Fig. 2 das zweite Eingangselement und das Ausgangselement des Überlagerungsgetriebes 12 vertauscht. Das Hohlrad 210 dient als zweites Eingangselement und der Planetenträger 220 als Ausgangselement, welches in trieblicher Verbindung mit der Abtriebswelle 6 steht. Hierdurch wird ein größeres Übersetzungsverhältnis hergestellt.

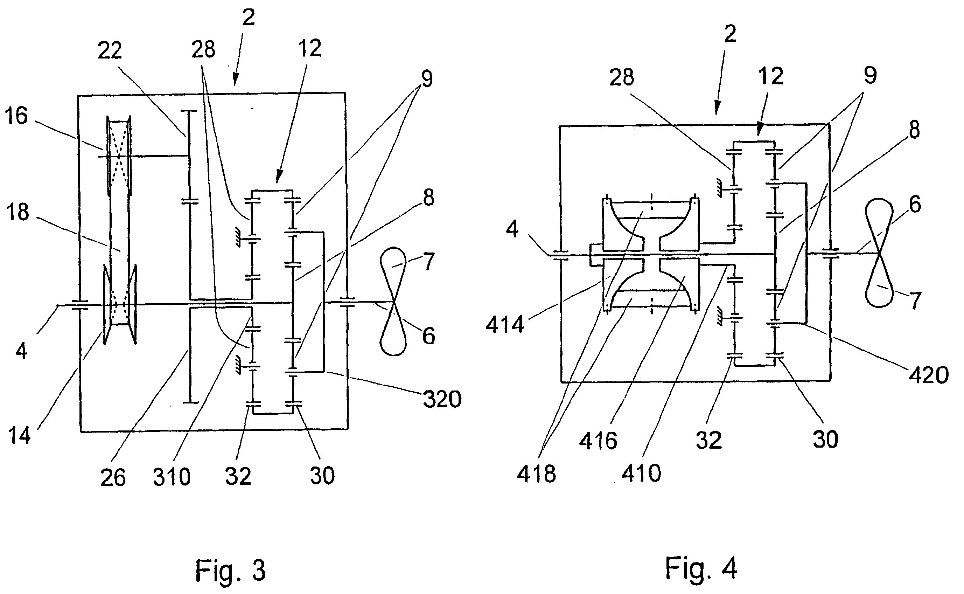

Bei der Ausführungsform gemäß Fig. 3 ist das Überlagerungsgetriebe 12 als Planetengetriebe mit einem ersten Sonnenrad 8 und einem zweiten Sonnenrad 310, einer ersten Gruppe 9 und einer zweiten Gruppe 28 von Planetenrädern, einem ersten Hohlrad 30 und einem zweiten Hohlrad 32 ausgeführt. Die beiden drehbar gelagerten Hohlräder sind untereinander drehfest verbunden. Die Planetenräder 9 der ersten Gruppe sind auf Achsen in einem drehbar gelagerten Planetenträger 320, der das Ausgangselement bildet; gelagert und in gleichzeitigem Zahneingriff mit dem ersten Sonnenrad 8 und dem ersten Hohlrad 30. Die Planetenräder 28 der zweiten Gruppe sind auf getriebefesten Achsen drehbar gelagert und in gleichzeitigem Zahneingriff mit dem zweiten Sonnenrad 310, das das zweite Eingangselement des Überlagerungsgetriebes ist, und dem zweiten Hohlrad 32. Das Sonnenrad 310 ist wiederum über eine Stirnradstufe 22, 26 vom sekundären Übertragungsglied der stufenlosen Getriebestufe angetrieben.

Ein solches Überlagerungsgetriebe bietet in Bezug auf radialen Bauraum Vorteile, wenn, wie in Fig. 4 gezeigt, im zweiten Leistungszweig der Schiffsgetriebestufe ein koaxial zur Antriebswelle 4 angeordnetes Reibradgetriebe vorgesehen ist, wobei das primäre Übertragungsglied mindestens eine Eingangsscheibe 414 mit toroidförmiger Innenfläche aufweist und das sekundäre Übertragungsglied mindestens eine Ausgangsscheibe 416 mit ebenfalls toroidförmiger Innenfläche. Zwischen den Innenflächen der koaxial angeordneten Scheiben 414, 416 dienen mehrere verschwenkbar gelagerte Reibräder 418 zur Momentenübertragung und Übersetzungsänderung. Die Reibräder bewirken eine umgekehrte Drehrichtung zwischen Ein- und Ausgangsscheibe, so daß die Überlagerung der beiden Leistungszweige auch bei dieser Ausführungsform ohne umlaufende Blindleistung erfolgt.

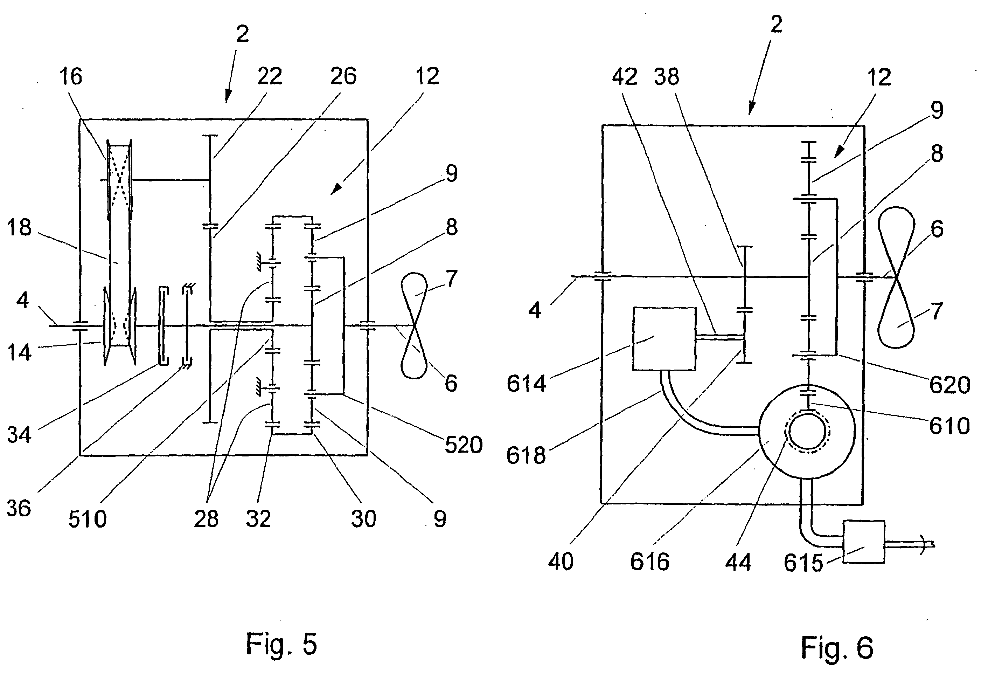

Bei der Ausführungsform gemäß Fig. 5 ist im ersten Leistungszweig trieblich vor dem ersten Eingangselement (Sonnenrad 8) eine Kupplung 34 und eine Bremse 36 vorgesehen. Das erste Eingangselement (Sonnenrad 8) kann hiermit wahlweise von der Antriebswelle 4 entkoppelt und stillgesetzt werden. Es ist also möglich, die Antriebsleistung ausschließlich über den zweiten Leistungszweig zu übertragen. Bei gleicher Motordrehzahl dreht das Abtriebselement (Schiffsschraube 7) wesentlich langsamer. Außerdem ist die Übersetzung auch noch in einem großen Bereich stufenlos veränderbar. Eine solche Ausgestaltung ermöglicht ein feinfühliges Manövrieren. Außerdem wird ein Langsamfahrmodus ohne den sonst üblichen Schlupf und die damit verbundenen Wärmeabfuhrprobleme bereitgestellt. Die Kupplung 34 bzw. die Bremse 36 können beispielsweise als hydraulisch betätigbare mehrlamellige Kupplung bzw. Bremse ausgeführt sein.

Bei der Ausgestaltung gemäß Fig. 6 ist im zweiten Leistungszweig der Schiffsgetriebestufe eine elektrische Generator-Motor Kombination vorgesehen, wobei als primäres Übertragungsglied der Generator 614 dient, dessen Welle 42 über eine Stirnradstufe 38, 40 von der Antriebswelle 4 angetrieben ist. Als sekundäres Übertragungsglied dient ein drehzahlregelbarer Elektromotor 616, der über eine elektrische Verbindungsleitung 618 mit dem Generator verbunden ist. Der Elektromotor treibt über ein Schneckenrad 44 das Hohlrad 610, welches das zweite Eingangsglied des Überlagerungsgetriebes ist, und sowohl innen- als auch außenverzahnt ist. Durch eine nicht dargestellte Steuerungseinrichtung ist die Drehzahl des Elektromotors in beide Drehrichtungen steuer- oder regelbar, wobei die benötigte elektrische Leistung vom Generator bereitgestellt wird. Wird im ersten Leistungszweig Leistung übertragen, während der Elektromotor 616 stillsteht, wirkt ein Stützmoment auf das Hohlrad 610. Durch die Hemmwirkung des Schneckentriebs 44, 610 ist das auf den Elektromotor wirkende Stützmoment wesentlich geringer, oder bei entsprechender selbsthemmender Auslegung sogar gleich Null.

Der optionale zweite Generator 615, der von einem nicht dargestellten, kleineren Zusatzmotor antreibbar ist, ist als weitere Spannungsquelle zur Versorgung des Elektromotors 616 vorgesehen. Für höchste Fahrleistungen, können sowohl der Hauptantriebsmotor als auch der Zusatzmotor betrieben werden, wobei die vom zweiten Generator 615 bereitgestellte elektrische Leistung in den zweiten Leistungszweig eingespeist wird. Für Langsamfahrt kann die Antriebsleistung ausschließlich von dem zweiten Generator bzw. dem Zusatzmotor bezogen werden. In diesem Betriebsfall kann der Hauptantriebsmotor abgeschaltet werden, um Kraftstoff zu sparen. Anstelle des zweiten Generators 615 kann auch eine andere Spannungsquelle vorgesehen sein.

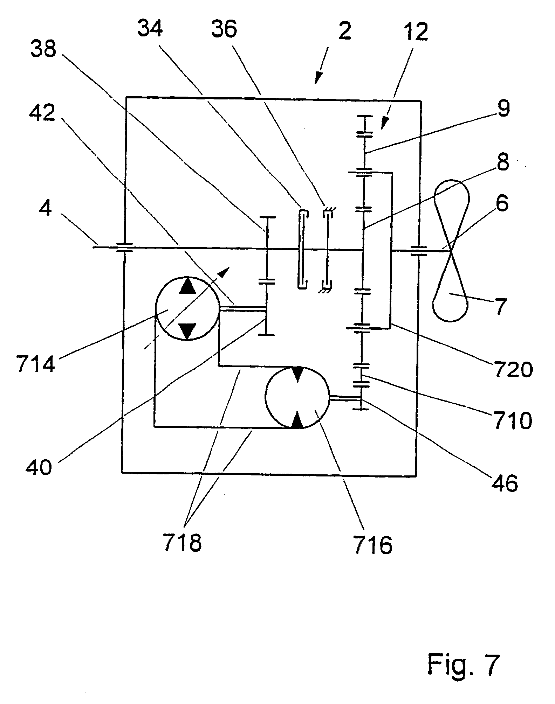

In der Ausführungsform gemäß Fig. 7 ist im zweiten Leistungszweig der Schiffsgetriebestufe ein Hydrostatgetriebe vorgesehen, wobei als primäres Übertragungsglied eine verstellbare Hydropumpe 714, als sekundäres Übertragungsglied ein Hydromotor 716 und als Übertragungsmittel hydraulische Verbindungsleitungen 718 dienen. Die Hydropumpe 714 ist über eine Stirnradstufe 38, 40 in trieblicher Verbindung mit der Antriebswelle 4. Der Hydromotor 714 treibt über ein Ritzel 46 das innen- und außenverzahnte Hohlrad 710, welches das zweite Eingangsglied des Überlagerungsgetriebes 12 ist. Mit Hilfe der Kupplung 34 ist wiederum die Entkoppelung des ersten Eingangsgliedes (Sonnenrad 8) von der Antriebswelle 4 möglich, wobei die Bremse 36 zum Stillsetzen des ersten Eingangsgliedes dient. Es ist also möglich, die Antriebsleistung ausschließlich über den zweiten Leistungszweig hydrostatisch zu übertragen. Das Fördervolumen der Hydropumpe ist von einem negativen Maximalwert bis zu einem positiven Maximalwert stufenlos veränderbar, so daß der Hydromotor in beide Drehrichtungen antreibbar ist. Das Abtriebselement ist bei hoher Gesamtübersetzung stufenlos sowohl vorwärts als auch rückwärts antreibbar.

Selbstverständlich kann auch ein Elektromotor in gleicher Weise wie der Hydromotor (Fig. 7) über ein Ritzel anstatt über eine Schneckenradstufe eintreiben und umgekehrt.

Sind bei geschlossener Kupplung 34 und geöffneter Bremse 36 beide Leistungszweige an der Übertragung beteiligt, vertauschen sich abhängig von der Drehrichtung des Hydromotors die Funktionen von Hydromotor 716 und Hydropumpe 714. Der Motor wird sozusagen automatisch zur Pumpe und umgekehrt.

### Bezugszeichen

- 2: Schiffsgetriebestufe
- 4: Antriebswelle
- 6: Abtriebswelle
- 7: Schiffsschraube
- 8: Sonnenrad
- 9: Planetenräder
- 10: Planetenträger
- 12: Überlagerungsgetriebe
- 14: Kegelscheibenpaar
- 16: Kegelscheibenpaar
- 18: Schubgliederband
- 20: Hohlrad
- 22: Stirnrad
- 24: Zwischenrad
- 26: Stirnrad
- 28: Planetenrad
- 30: Hohlrad
- 32: Hohlrad
- 34: Kupplung
- 36: Bremse
- 38: Stirnrad
- 40: Stirnrad
- 42: Antriebsachse
- 44: Schneckenrad
- 46: Ritzel
- 210: Hohlrad
- 220: Planetenträger
- 310: Sonnenrad
- 320: Planetenträger
- 410: Sonnenrad
- 414: Eingangsscheibe
- 416: Ausgangsscheibe
- 418: Reibräder
- 420: Planetenträger
- 510: Sonnenrad
- 520: Planetenträger
- 610: Hohlrad
- 614: Generator
- 615: Generator
- 616: Elektromotor
- 618: elektrische Leitung
- 620: Planetenträger
- 710: Hohlrad
- 714: Pumpe
- 716: Hydromotor
- 718: Hydraulikleitung
- 720: Planetenträger

## Patentansprüche

1. Schiffsgetriebestufe (2) mit veränderlicher Übersetzung welche zwischen einem Antriebsmotor und einem Abtriebselement (7) einer Schiffsantriebsanlage einbaubar ist, wobei die Schiffsgetriebestufe zwischen einer motorseitigen Antriebswelle (4) und einer abtriebselementseitigen Abtriebswelle (6) einen ersten, starrübersetzten Leistungszweig und einen zweiten, stufenlosen Leistungszweig aufweist, wobei der erste Leistungszweig auf ein erstes Eingangselement (8) eines Überlagerungsgetriebes (2) geführt ist und der zweite Leistungszweig auf ein zweites Eingangselement (610) des Überlagerungsgetriebes geführt ist und ein Ausgangselement (620) des Überlagerungsgetriebes in trieblicher Verbindung mit der Abtriebswelle (6) steht, **dadurch gekennzeichnet, dass** im zweiten Leistungszweig ein trieblich mit der Antriebswelle (4) verbundener elektrischer Generator (614) und ein trieblich mit dem zweiten Eingangselement (610) des Überlagerungsgetriebes verbundener drehzahlregelbarer Elektromotor (616), der vom Generator (614) gespeist wird, vorgesehen ist, wobei neben dem Generator (614) eine weitere Spannungsquelle zur Versorgung des Elektromotors (616) vorgesehen ist.

2. Schiffsgetriebstufe nach Anspruch 1, **dadurch gekennzeichnet, dass** die weitere Spannungsquelle ein von einem Zusatzmotor antreibbarer zweiter elektrischer Generator (615) ist.

3. Schiffsgetriebstufe nach Anspruch 1 oder 2 , **dadurch gekennzeichnet, daß** der Elektromotor (616) ein Schneckenrad (44) treibt, von welchem das zweite Eingangselement (610) des Überlagerungsgetriebes angetrieben ist.

4. Verfahren zum Betrieb einer Schiffsantriebsanlage mit einer Schiffsgetriebestufe nach einem der Ansprüche 2 oder 3, **dadurch gekennzeichnet, dass** für höchste Fahrleistungen sowohl ein Hauptantriebsmotor als auch der Zusatzmotor betrieben werden, wobei die vom dem zweiten Generator (615) bereitgestellte elektrische Leistung in den zweiten Leistungszweig eingespeist wird.

5. Verfahren zum Betrieb einer Schiffsantriebsanlage mit einer Schiffsgetriebestufe nach einem der Ansprüche 1 bis 4 **dadurch gekennzeichnet, dass** für Langsamfahrt die Antriebsleistung ausschließlich von der weiteren Spannungsquelle (615) bezogen wird.

6. Schiffsgetriebestufe (2) mit veränderlicher Übersetzung welche zwischen einem Antriebsmotor und einem Abtriebselement (7) einer Schiffsantriebsanlage einbaubar ist, wobei die Schiffsgetriebestufe zwischen einer motorseitigen Antriebswelle (4) und einer abtriebselementseitigen Abtriebswelle (6) einen ersten, starrübersetzten Leistungszweig und einen zweiten Leistungszweig aufweist, und im zweiten Leistungszweig eine stufenlose Übersetzungsstufe vorgesehen ist **dadurch gekennzeichnet, daß** im ersten Leistungszweig eine schaltbare Kupplung (34) zum wahlweisen Entkoppeln des ersten Eingangselements des Überlagerungsgetriebes von der Antriebswelle vorgesehen ist, und eine schaltbare Bremse (36) zum wahlweisen Stillsetzen des ersten Eingangselements des Überlagerungsgetriebes vorgesehen ist, um mit offener Kupplung und geschlossener Bremse die Antriebsleistung für Langsamfahrt ausschließlich über den zweiten, stufenlosen Leistungszweig zu übertragen.
(Weiter auf Seite 19 der ursprünglich eingereichten Unterlagen.)

## Claims

1. The invention relates to a variable-ratio marine transmission stage (2) mountable between a propelling engine and an output element (7) of a marine propulsion unit, with the marine transmission stage featuring a first, rigidly translated power branch and a second, continuously variable power branch between a motor-side drive shaft (4) and an output-element-side output shaft (6), with the first power branch being routed to a first input element (8) of a superimposed transmission (2) and the second power branch being routed to a second input element (610) of the superimposed transmission and with an output element (620) of the superimposed transmission having a driving connection with the output shaft (6), **characterized in that** the second power branch features an electric generator (614), which has a driving connection with the drive shaft (4), and a speed-controllable, generator (614)-fed electric motor (616), which has a driving connection with the second input element (610) of the superimposed transmission, with another power source supplying the electric motor (616) being provided in addition to the generator (614).

2. Marine transmission stage according to claim 1, **characterized in that** the additional power source is a second electric generator (615) that can be powered by an auxiliary motor.

3. Marine transmission stage according to claim 1 or 2, **characterized in that** the electric motor (616) drives a worm gear (44) which drives the second input element (610) of the superimposed transmission.

4. Method for operating a marine propulsion unit comprising a marine transmission stage according to claim 2 or 3, **characterized in that** for top performance the main drive engine and the supplementary engine are operated, with the electric power provided by the second generator (615) being supplied to the second power branch.

5. Method for operating a marine propulsion unit comprising a marine transmission stage according to one of the claims 1 to 4, **characterized in that** the propulsive power for slow speed is solely obtained from the additional power source (615).

6. Variable-ratio marine transmission stage (2) mountable between a propelling engine and an output element (7) of a marine propulsion unit, with the marine transmission stage featuring a first, rigidly translated power branch and a second power branch between a motor-side drive shaft (4) and an output-element-side output shaft (6), and with a continuously variable gear ratio being provided in the second power branch, **characterized in that** a controllable clutch (34) is provided in the first power branch for optional decoupling of the first input element of the superimposed transmission from the drive shaft, and also a controllable brake (36) is provided for optional immobilization of the first input element of the superimposed transmission, for the propulsive power for low speed to be exclusively transmitted via the second, continuously variable power branch with the clutch open and the brake closed.

## Revendications

1. Étage d'un réducteur marin (2) avec démultiplication variable, qui peut être installé entre un moteur de propulsion et un élément de sortie (7) d'un système de propulsion d'un navire, sachant que l'étage du réducteur marin forme - entre un arbre d'entrée côté moteur (4) et un arbre de sortie côté élément de sortie (6) - une première branche de dérivation de la puissance à démultiplication rigide et une deuxième branche de dérivation de la puissance à variation continue, sachant que la première branche de dérivation de la puissance mène à un premier élément d'entrée (8) d'un réducteur superposé (2) et sachant que la deuxième branche de dérivation de la puissance mène à un deuxième élément d'entrée (610) du réducteur superposé, et sachant qu'un élément de sortie (620) du réducteur superposé est connecté à l'arbre de sortie (6), de façon à assurer l'entraînement de celui-ci, **caractérisé en ce que** dans la deuxième branche de dérivation de la puissance est prévue une génératrice électrique (614) qui est connectée à l'arbre d'entrée (4) de façon à assurer l'entraînement de celui-ci et un moteur électrique à régime réglable (616) qui est connecté au deuxième élément d'entrée (610) du réducteur superposé de façon à assurer l'entraînement de cet élément d'entrée, le moteur électrique (616) étant alimenté par la génératrice (614), et sachant que, à part la génératrice (614), dans le système est prévue une autre source de tension pour l'alimentation en courant du moteur électrique (616).

2. Étage d'un réducteur marin selon la revendication 1, **caractérisé en ce que** la deuxième source de tension est une génératrice électrique (615) qui peut être entraînée par un moteur supplémentaire.

3. Étage d'un réducteur marin selon une des revendications 1 ou 2, **caractérisé en ce que** le moteur électrique (616) entraîne un pignon à vis sans fin (44), lequel entraîne le deuxième élément d'entrée (610) du réducteur superposé.

4. Méthode d'entraînement d'un système de propulsion marin doté d'un étage d'un réducteur marin selon une des revendications 2 ou 3, **caractérisé en ce que**, pour garantir des performances maximales, sont utilisés soit un moteur de propulsion principal soit un moteur supplémentaire, sachant que la deuxième branche de dérivation de la puissance est alimentée par la puissance électrique fournie par la deuxième génératrice (615).

5. Méthode d'entraînement d'un système de propulsion marin doté d'un étage d'un réducteur marin selon une des revendications 1 à 4, **caractérisé en ce que** pour la marche lente la puissance de propulsion est fournie exclusivement par la source de tension supplémentaire (615).

6. Étage d'un réducteur marin (2) avec démultiplication variable, qui peut être installé entre un moteur de propulsion et un élément de sortie (7) d'un système de propulsion d'un navire, sachant que l'étage du réducteur marin forme - entre un arbre d'entrée côté moteur (4) et un arbre de sortie côté élément de sortie (6) - une première branche de dérivation de la puissance à démultiplication rigide et une deuxième branche de dérivation de la puissance, et que dans la deuxième branche de dérivation de la puissance est prévu un étage de démultiplication à variation continue,
**caractérisé en ce que** dans la première branche de dérivation de la puissance est prévu un embrayage couplable (34) pour le désaccouplement facultatif du premier élément d'entrée du réducteur superposé de l'arbre d'entrée, et d'un frein (36) actionnable pour l'arrêt facultatif d'un premier élément d'entrée du réducteur superposé, afin de pouvoir transmettre la puissance de propulsion pour la marche lente - l'embrayage étant ouvert et le frein serré - exclusivement à travers la deuxième branche de dérivation de la puissance à variation continue.
